# EUROPEAN PATENT SPECIFICATION

(11) **EP 2 610 151 B1**
(45) Date of publication and mention of the grant of the patent: **03.05.2017**
(21) Application number: 12188492.8
(22) Date of filing: 15.10.2012
(51) Int. Cl.: B62J 6/04

(54) **Saddle-ride type vehicle**
Fahrzeug mit Sattel
Véhicule du type à selle

(30) Priority: 28.12.2011 JP 2011288302
(43) Date of publication of application: 03.07.2013
(73) Proprietor: Yamaha Hatsudoki Kabushiki Kaisha, Iwata-shi, Shizuoka 438-8501 (JP)
(72) Inventor: Worakasemsuk, Pairuch, 10540 Samutprakarn (TH)
(74) Representative: Grünecker Patent- und Rechtsanwälte PartG mbB

(56) References cited:
- WO-A1-2009/038050
- JP-A- H05 105 140

## Description

The present invention relates to a saddle-ride type vehicle. An example of such a saddle-ride type vehicle can be taken from the prior art document JP 05-105140 A.

Conventionally, a saddle-ride type vehicle comprises a tail light attached to a rear cover. A tail light includes a light-emitting element and a lens, and light from the light-emitting element permeates the lens to be radiated rearward. In the motorcycle disclosed in JP 2009-160973 A, for example, a cylindrical main lens is provided so as to protrude rearward from a rear cover. A license plate irradiation hole is formed in the bottom surface of the main lens, and a license plate irradiation lens is attached in the license plate irradiation hole.

The tail light has the role of attracting the attention of following vehicles. Therefore, there is demand for further improvement in the visibility of the tail light from the rear.

An object of the present invention is to provide a saddle-ride type vehicle in which visibility of the tail light from the rear can be improved.

Said object is solved by a saddle-ride type vehicle having the features of independent claim 1. Preferred embodiments are laid down in the dependent claims.

A saddle-ride type vehicle according to a first aspect comprises a rear cover, a tail light, and a tail light cover. The rear cover is disposed in a rear portion of the vehicle. The tail light includes a light-emitting element and a lens. The lens is formed from a translucent material and is disposed rearward of the light-emitting element. The tail light cover protrudes rearward from the rear cover. The tail light cover covers the periphery of the light-emitting element. The tail light cover is formed from an opaque material. The tail light cover includes a cylindrical shape. The lens is disposed in a rear surface of the tail light cover. The rear cover includes a protuberance and a recess. The protuberance protrudes rearward. The protuberance is spaced at a gap from the external peripheral surface of the tail light cover in a rear view of the vehicle. The protuberance encloses at least portion of the external peripheral surface of the tail light cover. The recess is disposed between the protuberance and the external peripheral surface of the tail light cover.

A saddle-ride type vehicle according to a second aspect is the saddle-ride type vehicle of the first aspect, wherein the tail light cover and the rear cover are separate from each other.

A saddle-ride type vehicle according to a third aspect is the saddle-ride type vehicle of the first aspect, further comprising a left side cover and a right side cover. The left side cover and the right side cover are for covering the rear cover from the sides. The left side cover and the right side cover extend to positions rearward of the recess.

A saddle-ride type vehicle according to a fourth aspect is the saddle-ride type vehicle of the third aspect, wherein the left side cover and the right side cover are separate from the rear cover.

A saddle-ride type vehicle according to a fifth aspect is the saddle-ride type vehicle of the first aspect, further comprising a top cover member. The top cover member encloses the external peripheral surface of the tail light cover from above. The top cover member includes a grip that can be grasped by a rider.

A saddle-ride type vehicle according to a sixth aspect is the saddle-ride type vehicle of the fifth aspect, further comprising a seat. The top cover member includes a seat support for supporting the seat.

A saddle-ride type vehicle according to a seventh aspect is the saddle-ride type vehicle of the fifth aspect, wherein the top cover member protrudes rearward. The top cover member covers the external peripheral surface of the tail light cover from above. The top cover member is spaced at a gap from the external peripheral surface of the tail light cover.

A saddle-ride type vehicle according to an eighth aspect is the saddle-ride type vehicle of the first aspect, further comprising a flasher. The flasher is disposed to the side of the rear cover. The protuberance is disposed between the flasher and the tail light cover in a rear view of the vehicle.

A saddle-ride type vehicle according to a ninth aspect is the saddle-ride type vehicle of the first aspect, wherein a rear end portion of the tail light cover includes a shape recessed to a position forward of a rear end portion of the lens in a side surface of the lens.

A saddle-ride type vehicle according to a tenth aspect is the saddle-ride type vehicle of the first aspect, wherein the rear cover includes a cut-out portion. The cut-out portion is positioned below the tail light cover. The protuberance is not provided in the cut-out portion.

A saddle-ride type vehicle according to an eleventh aspect is the saddle-ride type vehicle of the first aspect, wherein a rear end portion of the protuberance includes a shape inclined rearward and downward.

### [Advantageous Effects of Invention]

In the saddle-ride type vehicle according to the first aspect, the lens is disposed in the rear surface of the tail light cover. Because the tail light cover is formed from an opaque material, the translucent lens is visually emphasized. The cylindrical tail light cover protrudes rearward from the rear cover, and the lens is disposed in the rear surface of the tail light cover. Therefore, visibility of the lens from the rear is improved. Furthermore, an uneven shape is formed in the periphery of the tail light cover by the recess and protuberance of the rear cover. The rear surface of the tail light cover, i.e., the lens, is thereby visually emphasized. The above configuration makes it possible to improve visibility of the tail light from the rear in the saddle-ride type vehicle according to the present aspect.

In the saddle-ride type vehicle according to the second aspect, because the tail light cover and the rear cover are separate from each other, vibration of the rear cover is impeded from being transmitted to the tail light cover. Therefore, large vibrations in the tail light cover can be suppressed even if a large length of the tail light cover protrudes to the rear. In other words, durability improves in relation to vibrations of the tail light cover, and the tail light cover can be made to protrude farther rearward. The visibility of the tail light from the rear can thereby be further improved.

In the saddle-ride type vehicle according to the third aspect, the left side cover and the right side cover extend to a position rearward of the recess. Consequently, the rear end portion of the left side cover and the rear end portion of the right side cover constitute uneven shapes in the periphery of the tail light cover, similar to the protuberance of the rear cover. The visibility of the tail light from the rear can thereby be further improved.

In the saddle-ride type vehicle according to the fourth aspect, the left side cover and the right side cover are separate from the rear cover. Therefore, the recess of the rear cover can easily be configured with a shape in which the unevenness is more strongly emphasized.

In the saddle-ride type vehicle according to the fifth aspect, the top cover member encloses the periphery of the tail light cover, similar to the protuberance of the rear cover. The visibility of the tail light from the rear can thereby be further improved. Because the top cover member includes a grip, the top cover member can also function as a grab handle. Therefore, the number of components can be reduced.

In the saddle-ride type vehicle according to the sixth aspect, because the top cover member includes a seat support, the top cover member also functions as a seat-supporting member. Therefore, the number of components can be reduced.

In the saddle-ride type vehicle according to the seventh aspect, the top cover member is spaced at a gap from the external peripheral surface of the tail light cover. Consequently, the top cover member can be disposed at a lower position than in cases in which the protuberance of the rear cover is disposed also above the tail light cover and the top cover member is disposed above the protuberance. The vertical size increase of the rear portion of the vehicle can thereby be suppressed.

In the saddle-ride type vehicle according to the eighth aspect, the protuberance is disposed between the flasher and the tail light cover in a rear view of the vehicle. Therefore, the decrease in visibility of the tail light due to the light from the flasher can be suppressed.

In the saddle-ride type vehicle according to the ninth aspect, the rear end portion of the tail light cover includes a shape recessed to a position forward of the rear end portion of the lens in the side surface of the lens. Therefore, the visibility of the tail light from the side can be improved.

In the saddle-ride type vehicle according to the tenth aspect, the cut-out portion is positioned below the tail light cover, and the protuberance is not provided to the cut-out portion. Therefore, the light from the tail light can be less impeded by the protuberance from reaching the license plate and other members disposed below the tail light cover.

In the saddle-ride type vehicle according to the eleventh aspect, the rear end portion of the protuberance includes a shape inclined rearward and downward. Consequently, the length by which the tail light cover protrudes rearward from the top of the rear end portion of the protuberance can be increased. Members attached to the bottom of the rear end portion of the protuberance, e.g., the flasher, can be disposed farther to the rear.

### BRIEF DESCRIPTION OF THE DRAWINGS

FIG. 1 is a left side view of the saddle-ride type vehicle according to an embodiment;
FIG. 2 is a plan view of the saddle-ride type vehicle;
FIG. 3 is a rear view of the saddle-ride type vehicle;
FIG. 4 is a left side view of the rear portion of the saddle-ride type vehicle;
FIG. 5 is a cross-sectional view along line V-V in FIG. 3; and
FIG. 6 is a plan view of the saddle-ride type vehicle with the seat removed.

### DETAILED DESCRIPTION OF THE EMBODIMENTS

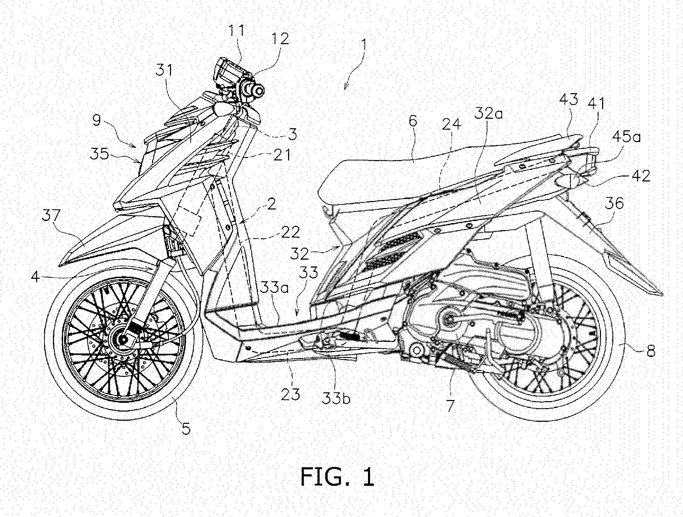

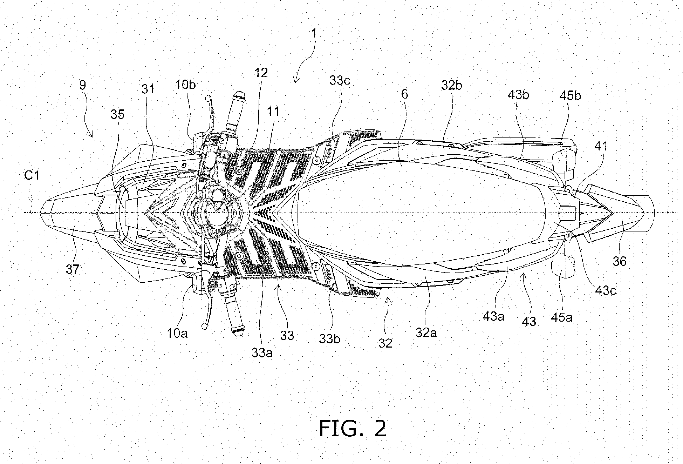

The saddle-ride type vehicle according to an embodiment is described hereinbelow with reference to the drawings. FIG. 1 is a left side view of the saddle-ride type vehicle 1 according to the present embodiment. FIG. 2 is a plan view of the saddle-ride type vehicle 1. The saddle-ride type vehicle 1 is a scooter type motorcycle. The saddle-ride type vehicle 1 includes a vehicle body frame 2, a steering shaft 3, a front fork 4, a front wheel 5, a seat 6, an engine unit 7, a rear wheel 8, and a vehicle body cover 9, as shown in FIG. 1. The forward-backward direction used in the description hereinbelow refers to the vehicle body forward-backward direction as seen by a rider sitting in the seat 6. The left-right direction refers to the vehicle body left-right direction as seen by a rider sitting in the seat 6. In the present embodiment, the phrase "outward in the vehicle width direction" means a direction away from a center line (see C1 in FIG. 2) of the vehicle extending in the forward-backward direction through the center in the vehicle width direction. The phrase "inward in the vehicle width direction" means a direction toward the center line of the vehicle extending in the forward-backward direction through the center in the vehicle width direction.

The vehicle body frame 2, for example, is formed from an iron pipe. The vehicle body frame 2 includes a head pipe portion 21, a down frame portion 22, an under frame portion 23, and a rear frame portion 24. The vehicle body frame 2 may be molded integrally by bending or another form of machining, or the vehicle body frame 2 may be configured by integrating a plurality of components by welding or the like. The head pipe portion 21 is positioned in the middle of the vehicle in the vehicle width direction. The steering shaft 3 is rotatably inserted into the head pipe portion 21. A handle portion 12 is linked to the top of the steering shaft 3. Left and right flashers 10a and 10b and a speed meter unit 11 for displaying the vehicle speed are attached to the handle portion 12, as shown in FIG. 2. The front fork 4 is linked to the bottom of the steering shaft 3. The front fork 4 rotatably supports the front wheel 5. A front fender 37 is disposed above the front wheel 5.

The down frame portion 22 is connected to the head pipe portion 21. The down frame portion 22 extends downward from the head pipe portion 21. The under frame portion 23 is connected to the bottom end of the down frame portion 22. The under frame portion 23 extends rearward from the down frame portion 22. The rear frame portion 24 is connected to the rear end portion of the under frame portion 23. The rear frame portion 24 extends rearward and upward from the rear end portion of the under frame portion 23. The seat 6 is disposed above the rear frame portion 24. The seat 6 is positioned rearward of the head pipe portion 21. The seat 6 is supported on the vehicle body frame 2. Specifically, the seat 6 is attached to the rear frame portion 24.

The engine unit 7 is swingably attached to the vehicle body frame 2 via a bracket (not shown). The engine unit 7 includes an output shaft (not shown). The rear wheel 8 is rotatably supported on this output shaft. A rear fender 36 is disposed above the rear wheel 8.

The vehicle body cover 9 includes a front cover 31, an under cover 33, a side cover 32, a tail light cover 41, a rear cover 42, and a top cover member 43. The vehicle body cover 9 is formed from a resin. The front cover 31 mainly covers the periphery of the head pipe portion 21 and the down frame portion 22. The headlight 35 is attached to the front surface of the front cover 31. The side cover 32 is positioned below the seat 6. The side cover 32 covers the front and both sides of the rear frame portion 24 disposed below the seat 6.

The under cover 33 is positioned between the front cover 31 and the side cover 32 in the forward-backward direction. The under cover 33 links the front cover 31 and the side cover 32. The under cover 33 includes a foot board 33a. The foot board 33a is positioned between the front wheel 5 and the seat 6 in the forward-backward direction. The foot board 33a is positioned below the seat 6. The foot board 33a is a surface where the rider sitting in the seat 6 rests their feet during travel. The foot board 33a is positioned above the under frame portion 23. The foot board 33a is positioned between the down frame portion 22 and the rear frame portion 24 in the forward-backward direction. The foot board 33a is formed to be flat across the vehicle width direction. The phrase "the foot board 33a is...flat" means that the foot board is flat enough for the rider to be able to rest their feet on any portion of the footrest. Specifically, unevenness for purposes such as slip prevention, for example, may be formed in the foot board 33a. Left and right protrusions 33b and 33c are provided to the foot board 33a. The left and right protrusions 33b and 33c protrude upward from the foot board 33a. The left and right protrusions 33b and 33c are positioned rearward of the front end of the seat 6.

The side cover 32 includes a left side cover 32a and a right side cover 32b. The left side cover 32a covers the left side of the rear frame portion 24. The left side cover 32a is disposed below the seat 6. The right side cover 32b is disposed in bilateral symmetry with the left side cover 32a. The right side cover 32b covers the right side of the rear frame portion 24. The right side cover 32b is disposed below the seat 6. The left side cover 32a and the right side cover 32b are separate from the rear cover 42.

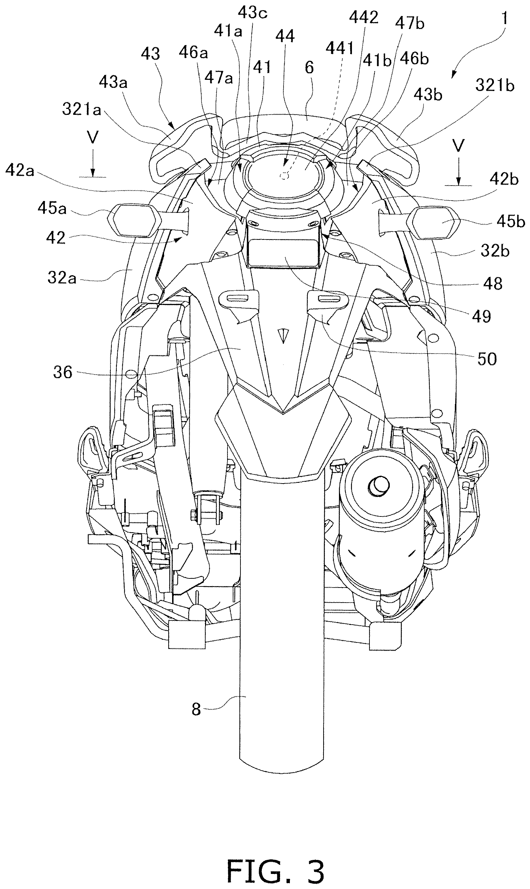

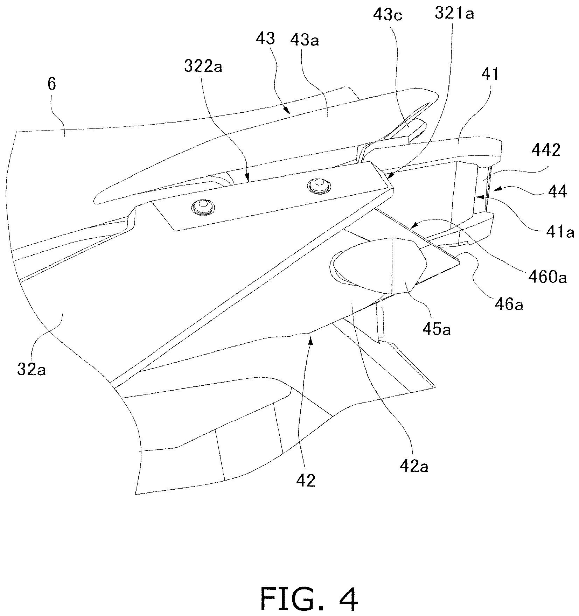

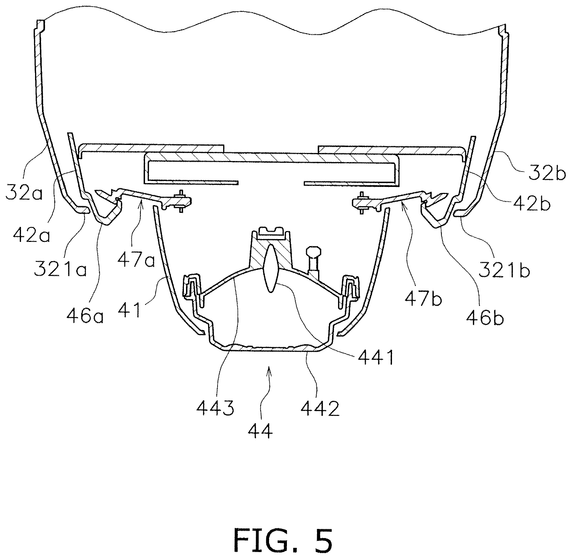

FIG. 3 is a rear view of the saddle-ride type vehicle 1. FIG. 4 is an enlarged side view of the rear portion of the saddle-ride type vehicle 1. The tail light cover 41 protrudes rearward from the rear cover 42. The tail light cover 41 includes a cylindrical shape. The tail light cover 41 is formed from an opaque material. For example, the tail light cover 41 is formed from an opaque resin. A tail light 44 is attached to the tail light cover 41. The tail light 44 includes a light-emitting element 441 and a lens 442. The light-emitting element 441 is a tail light bulb. The light-emitting element 441 is disposed in the interior of the tail light cover 41. Specifically, the tail light cover 41 covers the periphery of the light-emitting element 441. The lens 442 is disposed in the rear surface of the tail light cover 41. Specifically, the lens 442 is attached in an opening in the rear surface of the tail light cover 41. The lens 442 is disposed rearward of the light-emitting element 441. The lens 442 is formed from a translucent material. For example, the lens 442 is formed from a translucent resin. Recesses 41 a and 41 b are formed in the left and right side surfaces of the tail light cover 41, as shown in FIG. 4. Specifically, the rear end portions of the left and right side surfaces of the tail light cover 41, which are to the sides of the lens 442, both have shapes recessed to positions forward of the rear end portion of the lens 442. FIG. 5 is a cross-sectional view along line V-V in FIG. 3. The tail light 44 includes a reflector 443, as shown in FIG. 5. The reflector 443 is disposed in the interior of the tail light cover 41. The reflector 443 reflects light from the light-emitting element 441 rearward.

The rear cover 42 is disposed in the rear portion of the vehicle. The rear cover 42 is disposed above the rear fender 36. The rear cover 42 and the tail light cover 41 are components that are separate from each other. The rear cover 42 includes a left side surface portion 42a and a right side surface portion 42b. The left side surface portion 42a is disposed below the rear portion of the left side cover 32a. A left flasher 45a is disposed to the side of the left side surface portion 42a. The left flasher 45a is disposed so as to protrude to the left from the left side surface portion 42a. The right side surface portion 42b is disposed below the rear portion of the right side cover 32b. A right flasher 45b is disposed to the side of the right side surface portion 42b. The right flasher 45b is disposed so as to protrude to the right from the right side surface portion 42b.

Protuberances 46a and 46b and recesses 47a and 47b are formed in the rear surface of the rear cover 42. The protuberances 46a and 46b protrude rearward from the recesses 47a and 47b. The protuberances 46a and 46b are spaced at gaps from the external peripheral surface of the tail light cover 41 in a rear view of the vehicle. The protuberances 46a and 46b enclose at least portion of the external peripheral surface of the tail light cover 41. Specifically, the protuberances 46a and 46b include a left protuberance 46a and a right protuberance 46b. The left protuberance 46a covers the left side of the external peripheral surface of the tail light cover 41. The left protuberance 46a is configured from the rear end of the left side surface portion 42a. The left protuberance 46a includes a shape that is crooked along the external peripheral surface of the tail light cover 41. The left protuberance 46a is disposed between the left flasher 45a and the tail light cover 41 in a rear view. A rear end portion 460a of the left protuberance 46a includes a shape inclined rearward and downward in a side view, as shown in FIG. 4. The right protuberance 46b is disposed in bilateral symmetry with the left protuberance 46a. The right protuberance 46b covers the right side of the external peripheral surface of the tail light cover 41. The right protuberance 46b is configured from the rear end of the right side surface portion 42b. The right protuberance 46b includes a shape that is crooked along the external peripheral surface of the tail light cover 41. The right protuberance 46b is disposed between the right flasher 45b and the tail light cover 41 in a rear view. A rear end portion of the right protuberance 46b, similar to the rear end portion 460a of the left protuberance 46a, includes a shape inclined rearward and downward in a side view.

The recesses 47a and 47b are disposed between the protuberances 46a and 46b and the external peripheral surface of the tail light cover 41. The recesses 47a and 47b include a left recess 47a and a right recess 47b. The left recess 47a is disposed between the left protuberance 46a and the external peripheral surface of the tail light cover 41. The right recess 47b is disposed between the right protuberance 46b and the external peripheral surface of the tail light cover 41.

The rear cover 42 includes a cut-out portion 48 where the protuberances 46a and 46b are not provided. The cut-out portion 48 is positioned below the tail light cover 41. The left protuberance 46a and the right protuberance 46b are spaced at a gap in the vehicle width direction, and the cut-out portion 48 is positioned between the left protuberance 46a and the right protuberance 46b. A reflective plate 49 is disposed below the cut-out portion 48 in a rear view. An attachment portion 50 of the license plate is disposed below the cut-out portion 48. The attachment portion 50 of the license plate is provided to the rear fender 36.

The left side cover 32a described above covers portion of the left side surface portion 42a of the rear cover 42 from the side. Specifically, the left side cover 32a covers the top end portion of the left side surface portion 42a of the rear cover 42 from the side. The left side cover 32a extends to a position rearward of the left recess 47a. Specifically, a rear end portion 321 a of the left side cover 32a protrudes rearward from the left recess 47a, similar to the left protuberance 46a. The rear end portion 321 a of the left side cover 32a is spaced at a gap from the external peripheral surface of the tail light cover 41 in a rear view of the vehicle. The rear end portion 321 a of the left side cover 32a is disposed adjacent to the left protuberance 46a in a rear view. The rear end portion 321 a of the left side cover 32a is positioned above the left protuberance 46a. The rear end portion 321 a of the left side cover 32a, together with the left protuberance 46a, encloses portion of the external peripheral surface of the tail light cover 41.

The right side cover 32b covers portion of the right side surface portion 42b of the rear cover 42 from the side. Specifically, the right side cover 32b covers the top end portion of the right side surface portion 42b of the rear cover 42 from the side. The right side cover 32b extends to a position rearward of the right recess 47b. Specifically, a rear end portion 321 b of the right side cover 32b protrudes rearward from the right recess 47b, similar to the right protuberance 46b. The rear end portion 321 b of the right side cover 32b is spaced at a gap from the external peripheral surface of the tail light cover 41 in a rear view of the vehicle. In a rear view, the rear end portion 321 b of the right side cover 32b is disposed adjacent to the right protuberance 46b. The rear end portion 321 b of the right side cover 32b is positioned above the right protuberance 46b. The rear end portion 321 b of the right side cover 32b, together with the right protuberance 46b, encloses portion of the external peripheral surface of the tail light cover 41.

The top cover member 43 encloses the external peripheral surface of the tail light cover 41 from above. The top cover member 43 is integrally molded from a resin, for example. The tail light cover 41 protrudes farther to the rear than the top cover member 43 in a plan view. The top cover member 43 includes a left grip 43a, a right grip 43b, and a linking portion 43c. The left grip 43a and the right grip 43b are portions that can be grasped by the rider. The left grip 43a protrudes rearward from the linking portion 43c. The left grip 43a is disposed above the left side cover 32a. The left grip 43a is spaced at a gap from the top end 322a of the left side cover 32a, as shown in FIG. 4. The right grip 43b is disposed in bilateral symmetry with the left grip 43a. The right grip 43b protrudes rearward from the linking portion 43c. The right grip 43b is disposed above the right side cover 32b. The right grip 43b is spaced at a gap from the top end of the right side cover 32b. The rear end portion of the tail light cover 41 is disposed so as to protrude farther to the rear than the rear end portions of the left and right protuberances 46a and 46b and the rear end portions of the left and right grips 43a and 43b.

The linking portion 43c is disposed between the left grip 43a and the right grip 43b in the vehicle width direction. The linking portion 43c links the left grip 43a and the right grip 43b. The linking portion 43c is disposed above the tail light cover 41. The linking portion 43c covers the external peripheral surface of the tail light cover 41 from above. The linking portion 43c is spaced at a gap from the external peripheral surface of the tail light cover 41. In a rear view, the linking portion 43c is disposed adjacent to the rear end portion 321a of the left side cover 32a and the rear end portion 321 b of the right side cover 32b. In a rear view, the linking portion 43c is disposed between the rear end portion 321 a of the left side cover 32a and the rear end portion 321 b of the right side cover 32b. In a rear view, the linking portion 43c includes a shape that is crooked along the external peripheral surface of the tail light cover 41.

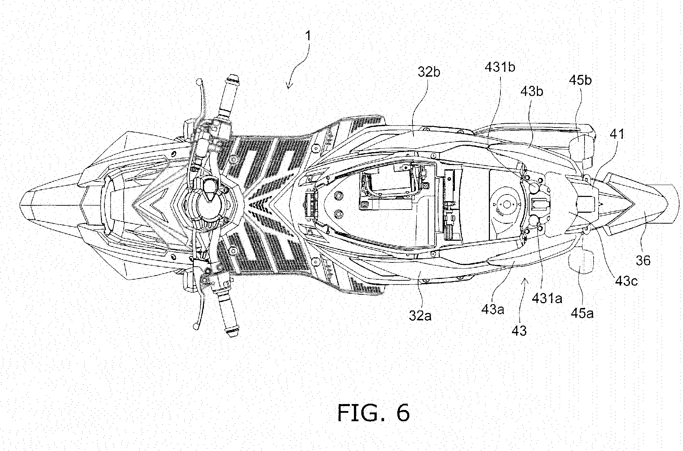

FIG. 6 is a plan view of the saddle-ride type vehicle 1 with the seat 6 removed. The top cover member 43 includes seat supports 431 a and 431 b for supporting the seat 6. The seat supports 431 a and 431 b include a left seat support 431 a and a right seat support 431 b. The seat supports 431 a and 431 b are disposed in front of the linking portion 43c. The seat supports 431 a and 431 b are disposed between the left grip 43a and the right grip 43b in the vehicle width direction. The seat supports 431 a and 431 b are in contact with portion of the bottom surface of the seat 6. The seat supports 431 a and 431 b thereby support the seat 6.

The saddle-ride type vehicle 1 according to the present embodiment has the following characteristics.

The lens 442 is disposed in the rear surface of the tail light cover 41. Because the tail light cover 41 is formed from an opaque material, the translucent lens 442 is visually emphasized. The cylindrical tail light cover 41 protrudes rearward from the rear cover 42, and the lens 442 is disposed in the rear surface of the tail light cover 41. Therefore, the visibility of the lens 442 from the rear is improved.

Uneven shapes are formed in the periphery of the tail light cover 41 by the recesses 47a and 47b and the protuberances 46a and 46b of the rear cover 42. The rear surface of the tail light cover 41, i.e., the lens 442, is thereby visually emphasized. The rear end portion 321 a of the left side cover 32a and the rear end portion 321 b of the right side cover 32b enclose the periphery of the tail light cover 41, similar to the protuberances 46a and 46b of the rear cover 42. Furthermore, the rear end portion of the linking portion 43c of the top cover member 43 encloses the periphery of the tail light cover 41, similar to the protuberances 46a and 46b of the rear cover 42. The protuberances 46a and 46b of the rear cover 42, the rear end portions 321 a and 321 b of the left and right side covers 32a and 32b, and the rear end portion of the linking portion 43c of the top cover member 43 enclose the periphery of the tail light cover 41 and form uneven shapes in the periphery of the tail light cover 41. The visibility of the tail light 44 from the rear is thereby improved.

Because the tail light cover 41 and the rear cover 42 are separate from each other, vibrations of the rear cover 42 are not readily transmitted to the tail light cover 41. Therefore, large vibrations of the tail light cover 41 can be suppressed even when the length by which the tail light cover 41 protrudes rearward is large. In other words, the durability of the tail light cover 41 with respect to vibration improves, the tail light cover 41 can therefore be made to protrude rearward by a large amount, and the visibility of the tail light 44 from the rear can be further improved.

The left side cover 32a and the right side cover 32b are separate from the rear cover 42. Therefore, they can easily be configured with shapes in which their unevenness relative to the recesses 47a and 47b of the rear cover 42 is further emphasized.

The top cover member 43 includes the grips 43a and 43b, and therefore also functions as a handle. Therefore, the number of components can be reduced. The top cover member 43 includes the seat supports 431a and 431 b and therefore also functions as a support member of the seat 6. Therefore, the number of components can be reduced.

The linking portion 43c of the top cover member 43 and the protuberances 46a and 46b of the rear cover 42 together similarly constitute uneven shapes in the periphery of the tail light cover 41. Consequently, the top cover member 43 can be disposed in a lower position than in cases in which the protuberances of the rear cover 42 are disposed above the tail light cover 41 and the top cover member 43 is disposed above the protuberances. Vertical size increases in the rear portion of the vehicle can thereby be suppressed.

The left and right protuberances 46a and 46b are disposed between the left and right flashers 45a and 45b and the tail light cover 41 in a rear view. Therefore, reductions in the visibility of the tail light 44 due to light from the left and right flashers 45a and 45b can be suppressed.

The side surfaces of the rear end portion of the tail light cover 41 include shapes that are recessed to positions forward of the rear end portion of the lens 442. Therefore, the visibility of the tail light 44 from the sides can be improved.

The cut-out portion 48 is provided below the tail light cover 41, and no protuberances are provided to the cut-out portion 48. Therefore, the light from the tail light 44 can be less impeded by the protuberances from reaching the license plate disposed below the tail light cover 41.

The rear end portions of the protuberances 46a and 46b include shapes that are inclined rearward and downward. Consequently, the rearward protruding length of the tail light cover 41 can be increased in the top portions of the rear end portions of the protuberances 46a and 46b. The flashers 45a and 45b can also be disposed farther to the rear.

An embodiment was described above, but the present invention is not limited to the above embodiment, and various modifications can be made within a range that does not deviate from the scope of the present teaching.

The saddle-ride type vehicle is not limited to a motorcycle, and includes three-wheeled vehicles, all-terrain vehicles, and snowmobiles. The motorcycle is also not limited to a scooter, and includes mopeds and sports type motorcycles.

In the above embodiment, the protuberances 46a and 46b are disposed as being separated to the left and right, but the protuberances 46a and 46b may be continuous above or below the tail light cover 41. Alternatively, the protuberances of the rear cover 42 may be disposed so as to enclose the entire periphery of the tail light cover 41. Specifically, the cut-out portion 48 of the rear cover 42 may be omitted. To improve the visibility of the license plate, the cut-out portion 48 is preferably provided to the rear cover 42.

The tail light cover 41 and the rear cover 42 may be formed integrally. However, to suppress transmission of vibration between the tail light cover 41 and the rear cover 42, the tail light cover 41 and the rear cover 42 are preferably separate components as in the above embodiment.

The left and right side covers 32a and 32b may be formed integrally with the rear cover 42. However, to emphasize the uneven shapes between the left and right side covers 32a and 32b and the rear cover 42, the left and right side covers 32a, 32b are preferably separate from the rear cover 42 as in the above embodiment. This is because the uneven shapes between the left and right side covers 32a and 32b and the rear cover 42 can be made more distinct than in cases in which the left and right side covers 32a and 32b and the rear cover 42 are molded integrally.

The grips 43a and 43b may be provided separate from the top cover member 43. However, to reduce the number of components, the top cover member 43 preferably includes the grips 43a and 43b as in the above embodiment. The seat supports 431a and 431 b may be separate from the top cover member 43. However, to reduce the number of components, the top cover member 43 preferably includes the seat supports 431 a and 431 b as in the above embodiment.

The side surfaces of the rear end portion of the tail light cover 41 are not limited to recessed shapes as in the above embodiment. However, to improve the visibility of the tail light 44 from the sides, the side surfaces of the rear end portion of the tail light cover 41 preferably have recessed shapes as in the above embodiment.

The rear end portions of the protuberances 46a and 46b are not limited to inclined shapes as in the above embodiment. However, to increase the rearward protruding length of the tail light cover 41 and dispose the positions of the flashers 45a and 45b as far to the rear as possible, the rear end portions of the protuberances 46a and 46b preferably include inclined shapes as in the above embodiment.

The embodiment discloses a saddle-ride type vehicle comprising: a rear cover 42 disposed in a rear portion of a vehicle; a tail light 44 including a light-emitting element 441 and a lens 442, the lens 442 being formed from a translucent material and disposed rearward of the light-emitting element 441; and a cylindrical tail light cover 41 protruding rearward from the rear cover 42, covering the periphery of the light-emitting element 441; wherein the lens 442 is disposed in a rear surface of the tail light cover 41; and the rear cover 42 includes: at least one protuberance 46a,46b protruding rearward, being spaced at a gap from a external peripheral surface of the tail light cover 41 in a rear view of the vehicle, and covering at least portion of the external peripheral surface of the tail light cover 41 in side view of the vehicle; and a recess section 47a,47b disposed between said protuberance 46a,46b and the external peripheral surface of the tail light cover 41.

In particular, the rear cover 42 includes: a left protuberance 46a and a right protuberance 46b protruding rearward, each being spaced at similar gap from the external peripheral surface of the tail light cover 41 in a rear view of the vehicle, and a left recess section 47a and a right recess section 47b is disposed between the left protuberance 46a and a right protuberance 46b, respectively.

The right protuberance 46b is disposed in bilateral symmetry with the left protuberance 46a.

The embodiment further comprises a left side cover 32a and a right side cover 32b for covering the rear cover 42 from the sides, wherein the left side cover 32a and the right side cover 32b extend to positions rearward of the left recess section 47a and the right recess section 47b.

The left side cover 32a and the right side cover 32b are separate from the rear cover 42.

The cylindrical tail light cover 41 is formed from an opaque material. The tail light cover 41 and the rear cover 42 are separate from each other.

The embodiment further comprises a top cover member 43 for covering the external peripheral surface of the tail light cover 41 from above, wherein the top cover member 43 includes at least one grip 43a,43b that can be grasped by a rider.

The embodiment further comprises a seat 6, wherein the top cover member 43 includes a seat support for supporting the seat 6.

The top cover member 43 protrudes rearward and covers the external peripheral surface of the tail light cover 41 from above, and the top cover member 43 is spaced at a gap from the external peripheral surface of the tail light cover 41.

The embodiment further comprises at least one flasher 45a,45b disposed to the side of the rear cover 42, wherein the protuberance 46a,46b is disposed between the flasher 45a,45b and the tail light cover 41 in a rear view of the vehicle.

A rear end portion of the tail light cover 41 includes a shape recessed to a position forward of a rear end portion of the lens 442 in a side surface of the lens 442.

The rear cover 42 includes a cut-out portion 48 where the protuberance 46a,46b is not provided, and the cut-out portion is positioned below the tail light cover 41.

A rear end portion of the protuberance 46a,46b includes a shape inclined rearward and downward.

## Claims

1. A saddle-ride type vehicle comprising:
a rear cover (42) disposed in a rear portion of a vehicle;
a tail light (44) including a light-emitting element (441) and a lens (442), the lens (442) being formed from a translucent material and disposed rearward of the light-emitting element (441); and
a cylindrical tail light cover (41) formed from an opaque material and protruding rearward from the rear cover (42), covering the periphery of the light-emitting element (441);
wherein the lens (442) is disposed in a rear surface of the tail light cover (41); and the rear cover (42) includes:
a left protuberance (46a) and a right protuberance (46b) protruding rearward, each being spaced at similar gap from the external peripheral surface of the tail light cover (41) in a rear view of the vehicle, and a left recess section (47a) and a right recess section (47b) is disposed between the left protuberance (46a) and the right protuberance (46b), respectively.

2. A saddle-ride type vehicle according to claim 1, wherein the right protuberance (46b) is disposed in bilateral symmetry with the left protuberance (46a).

3. A saddle-ride type vehicle according to claims 1 or 2, further comprising a left side cover (32a) and a right side cover (32b) for covering the rear cover (42) from the sides, wherein the left side cover (32a) and the right side cover (32b) extend to positions rearward of the left recess section (47a) and the right recess section (47b).

4. A saddle-ride type vehicle according to claim 3, wherein the left side cover (32a) and the right side cover (32b) are separate from the rear cover (42).

5. A saddle-ride type vehicle according to one of the claims 1 to 4, wherein the tail light cover (41) and the rear cover (42) are separate from each other.

6. A saddle-ride type vehicle according one of the claims 1 to 5, further comprising a top cover member (43) for covering the external peripheral surface of the tail light cover (41) from above, wherein the top cover member (43) includes at least one grip (43a,43b) that can be grasped by a rider.

7. A saddle-ride type vehicle according to claim 6, further comprising a seat (6), wherein the top cover member (43) includes a seat support for supporting the seat (6).

8. A saddle-ride type vehicle according to claim 6 or 7, wherein the top cover member (43) protrudes rearward and covers the external peripheral surface of the tail light cover (41) from above, and the top cover member (43) is spaced at a gap from the external peripheral surface of the tail light cover (41).

9. A saddle-ride type vehicle according one of the claims 1 to 8, further comprising at least one flasher (45a,45b) disposed to the side of the rear cover (42), wherein the protuberance (46a,46b) is disposed between the flasher (45a,45b) and the tail light cover (41) in a rear view of the vehicle.

10. A saddle-ride type vehicle according one of the claims 1 to 9, wherein a rear end portion of the tail light cover (41) includes a shape recessed to a position forward of a rear end portion of the lens (442) in a side surface of the lens (442).

11. A saddle-ride type vehicle according one of the claims 1 to 10, wherein the rear cover (42) includes a cut-out portion (48) where the protuberance (46a,46b) is not provided, and the cut-out portion is positioned below the tail light cover (41).

12. A saddle-ride type vehicle according one of the claims 1 to 11, wherein a rear end portion of the protuberance (46a,46b) includes a shape inclined rearward and downward.

## Patentansprüche

1. Ein Sattel-Reit-Typ-Fahrzeug, das umfasst:
eine hintere Abdeckung (42), die an einer hinteren Position eines Fahrzeugs positioniert ist;
ein Rücklicht (44), welches ein Licht-Emittierenden-Element (441) und eine Licht-Scheibe (442) beinhaltet, die Licht-Scheibe (442) ist aus einem transparenten Material ausgebildet und hinter dem Licht-Emittierenden-Element (441) positioniert; und
eine zylindrische Rücklicht-Abdeckung (41), die aus einem lichtdichten Material ausgebildet ist und nach hinten von der hinteren Abdeckung (42) vorsteht und den Umfang des Licht-Emittierenden-Elements (441) abdeckt;
wobei die Licht-Scheibe (442) in einer hinteren Fläche der Rücklicht-Abdeckung (41) positioniert ist; und
die hintere Abdeckung (42) beinhaltet:
eine linken Vorstand (46a) und einen rechten Vorstand (46b), die nach hinten vorstehen, jeder ist mit gleichen Spalt von der äußeren Umfangsfläche der Rücklicht-Abdeckung (41), in einer Rückansicht des Fahrzeugs, beabstandet, und ein linker ausgenommener Abschnitt (47a) und ein rechter ausgenommener Abschnitt (47b) sind jeweils zwischen dem linken Vorstand (46a) und dem rechten Vorstand (46b) positioniert.

2. Ein Sattel-Reit-Typ-Fahrzeug gemäß Anspruch 1, wobei der rechte Vorstand (46b) ist disymmetrisch mit dem linken Vorstand (46a).

3. Ein Sattel-Reit-Typ-Fahrzeug gemäß Anspruch 1 oder 2, das weiterhin umfasst eine linke Seiten-Abdeckung (32a) und eine rechte Seiten-Abdeckung (32b) zum Abdecken der hinteren Abdeckung (42) von den Seiten, wobei die linke Seiten-Abdeckung (32a) und die rechte Seiten-Abdeckung (32b) sich zu Positionen hinter dem linken ausgenommenen Abschnitt (47a) und den rechten ausgenommenen Abschnitt (47b) erstrecken.

4. Ein Sattel-Reit-Typ-Fahrzeug gemäß Anspruch 3, wobei die linke Seiten-Abdeckung (32a) und die rechte Seiten-Abdeckung (32b) getrennt von der hinteren Abdeckung (42) sind.

5. Ein Sattel-Reit-Typ-Fahrzeug gemäß einem der Ansprüche 1 bis 4, wobei die Rücklicht-Abdeckung (41) und die hintere Abdeckung (42) getrennt voneinander sind.

6. Ein Sattel-Reit-Typ-Fahrzeug gemäß einem der Ansprüche 1 bis 5, das weiterhin umfasst ein oberes Abdeckelement (43) zum Abdecken der äußeren Umfangsfläche der Rücklicht-Abdeckung (41) von oben, wobei das obere Abdeckelement (43) zumindest einen Griff (43a, 43b) beinhaltet, welcher durch einen Fahrer ergriffen werden kann.

7. Ein Sattel-Reit-Typ-Fahrzeug gemäß Anspruch 6, das weiterhin umfasst einen Sitz (6), wobei das obere Abdeckelement (43) ein Sitz-Lager zum Lagern des Sitzes (6) beinhaltet.

8. Ein Sattel-Reit-Typ-Fahrzeug gemäß Anspruch 6 oder 7, wobei das obere Abdeckelement (43) nach hinten vorsteht und die äußere Umfangsfläche der Rücklicht-Abdeckung (41) von oben abdeckt, und das obere Abdeckelement (43) ist mit einem Spalt von der äußeren Umfangsfläche der Rücklicht-Abdeckung (41) beabstandet.

9. Ein Sattel-Reit-Typ-Fahrzeug gemäß einem der Ansprüche 1 bis 8, das weiterhin umfasst zumindest einen Blinker (45a, 45b), der an der Seite der hinteren Abdeckung (42) positioniert ist, wobei der Vorstand (46a, 46b) zwischen dem Blinker (45a, 45b) und der Rücklicht-Abdeckung (41) in einer Rückansicht des Fahrzeugs positioniert ist.

10. Ein Sattel-Reit-Typ-Fahrzeug gemäß einem der Ansprüche 1 bis 9, wobei ein hinterer Endabschnitt der Rücklicht-Abdeckung (41) eine Form, ausgenommen an einer Position vor einem hinteren Endabschnitt der Licht-Scheibe (442) in einer Seitenfläche der Licht-Scheibe (442), beinhaltet.

11. Ein Sattel-Reit-Typ-Fahrzeug gemäß einem der Ansprüche 1 bis 10, wobei die hintere Abdeckung (42) einen Ausschnitt-Abschnitt (48) beinhaltet, an dem der Vorstand (64a, 64b) nicht vorgesehen ist, und der Ausschnitt-Abschnitt ist unterhalb der Rücklicht-Abdeckung (41) positioniert.

12. Ein Sattel-Reit-Typ-Fahrzeug gemäß einem der Ansprüche 1 bis 11, wobei ein hinterer Endabschnitt des Vorstands (46a, 46b) eine Form beinhaltet, die nach hinten und unten geneigt ist.

## Revendications

1. Véhicule de type à selle comprenant :
un carter arrière (42) placé dans une partie arrière de véhicule,
un feu arrière (44) incluant un élément d'émission de lumière (441) et une optique (442), l'optique (442) étant formé d'un matériau translucide est placé à l'arrière de l'élément d'émission de lumière (441), et
un carter cylindrique de feu arrière (41) formé à partir d'un matériau opaque et faisant saillie vers l'arrière depuis le carter arrière (42), recouvrant la périphérie de l'élément d'émission de lumière (441),
dans lequel l'optique (442) est disposée sur une surface arrière du carter de feu arrière (41), et
le carter arrière (42) inclut :
une protubérance gauche (46a) et une protubérance droite (46b) dépassant vers l'arrière, chacune étant espacée d'un même intervalle par rapport à la surface externe du carter de feu arrière (41) selon une vue arrière du véhicule ; et une section en retrait gauche (47a) ainsi qu'une section en retrait droite (47b) sont placées respectivement entre la protubérance gauche (46a) et la protubérance droite (46b).

2. Véhicule de type à selle selon la revendication 1, dans lequel la protubérance droite (46b) est disposée selon une symétrie bilatérale avec la protubérance gauche (46a).

3. Véhicule de type à selle selon les revendications 1 ou 2, comprenant en outre un carter de côté gauche (32a) et un carter de côté droit (32b) destinés à recouvrir le carter arrière (42) depuis les côtés, le carter de côté gauche (32a) et le carter de côté droit (32b) s'étendant vers des positions à l'arrière de la section en retrait gauche (47a) et de la section en retrait droite (47b).

4. Véhicule de type à selle selon la revendication 3, dans lequel le carter de côté gauche (32a) et le carter de côté droit (32b) sont séparés du carter arrière (42).

5. Véhicule de type à selle selon l'une des revendications 1 à 4, dans lequel le carter de feu arrière (41) et le carter arrière (42) sont séparés l'un de l'autre.

6. Véhicule de type à selle selon l'une des revendications 1 à 5, comprenant en outre un élément formant carter supérieur (43) destiné à recouvrir la surface périphérique externe du carter de feu arrière (41) par le dessus, l'élément formant carter supérieur (43) incluant au moins un dispositif de préhension (43a, 43b) qui peut être saisi par un passager.

7. Véhicule de type à selle selon la revendication 6, comprenant en outre un siège (6), l'élément formant carter supérieur (43) incluant un support de siège destiné à soutenir le siège (6).

8. Véhicule de type à selle selon la revendication 6 ou la revendication 7, dans lequel l'élément formant carter supérieur (43) dépasse vers l'arrière et recouvre la surface périphérique externe du carter de feu arrière (41) par le dessus, et l'élément formant carter supérieur (43) est espacé d'un certain intervalle de la surface périphérique externe du carter de feu arrière (41).

9. Véhicule de type à selle selon l'une des revendications 1 à 8, comprenant en outre au moins un feu clignotant (45a, 45b) disposé sur le flanc du carter arrière (42), la protubérance (46a, 46b) étant placée entre le feu clignotant (45a, 45b) et le carter de feu arrière (41) selon une vue arrière du véhicule.

10. Véhicule de type à selle selon l'une des revendications 1 à 9, dans lequel la partie terminale arrière du carter de feu arrière (41) inclut une forme en creux vers une position en avant de la partie terminale arrière de l'optique (442) dans une surface latérale de l'optique (442).

11. Véhicule de type à selle selon l'une des revendications 1 à 10, dans lequel le carter arrière (40) inclut une partie de découpe (48) où ne se trouve pas la protubérance (46a, 46b), et la partie de découpe est positionnée en dessous du carter de feu arrière (41).

12. Véhicule de type à selle selon l'une des revendications 1 à 11, dans lequel la partie terminale arrière de la protubérance (46a, 46b) inclut une forme inclinée vers l'arrière et vers le bas.
